## Europäisches Patentamt

## European Patent Office

## Office européen des brevets

(11) Veröffentlichungsnummer: **0 008 321**
A2

(12) # EUROPÄISCHE PATENTANMELDUNG

(21) Anmeldenummer: **79101614.0**

(22) Anmeldetag: **28.05.79**

(51) Int. Cl.³: **C 08 F 255/02**
C 08 F 2/44
//C08F114/06, (C08F255/02, 214/06)

(30) Priorität: **25.08.78 DE 2837173**

(43) Veröffentlichungstag der Anmeldung:
**05.03.80** Patentblatt **80/5**

(84) Benannte Vertragsstaaten:
**BE CH DE FR GB IT NL SE**

(71) Anmelder: **DYNAMIT NOBEL AKTIENGESELLSCHAFT**
**Patentabteilung Postfach 1209**
**D-5210 Troisdorf, Bez. Köln(DE)**

(72) Erfinder: **Büning, Robert, Dr.**
**Lessingstrasse 11**
**D-5210 Troisdorf-Sieglar(DE)**

(72) Erfinder: **Konermann, Hans-Ewald, Dr.**
**Kiefernstrasse 2**
**D-5210 Troisdorf-Oberlar(DE)**

(54) **Verfahren zur Massepolymerisation von Vinylchlorid.**

(57) Die vorliegende Erfindung betrifft ein Verfahren zur Polymerisation von Vinylchlorid nach dem Massepolymerisations-verfahren, daher in Abwesenheit von Lösungsmitteln, Verdünnungsmitteln oder Suspensions- bzw. Emulsionsmitteln für das Polymere oder Monomere, in Gegenwart von zur Herstellung von verarbeitungsfertigen Compounds dienenden Additiven. Das Verfahren ist besonders durch die Gegenwart von feinteiligen inerten, anorganischen Harstoffen und schlagfestmachenden Polymeren gekennzeichnet.

EP 0 008 321 A2

Troisdorf, den 23. August 1978
OZ: 78 072 (2889)

DYNAMIT NOBEL AKTIENGESELLSCHAFT
Troisdorf, Bez. Köln

Verfahren zur Massepolymerisation von Vinylchlorid

Gegenstand der Erfindung ist ein Verfahren zur Massepolymerisation von Vinylchlorid in Gegenwart von Additiven.

Die Polymerisation von Vinylchlorid in Gegenwart von Füllstoffen, einem schlagfestmachenden Polymeren und weiteren Additiven, wie sie in verarbeitungsfertigen Compounds enthalten sind, wird in der DE-OS 24 00 611 beschrieben. Dabei arbeitet man nach dem Suspensionsverfahren. Suspensionsverfahren haben aber bezüglich der Aufarbeitung Nachteile, weilein Abwasser anfällt, welches geringe Mengen Schadstoffe enthält, die trotz der verhältnismäßig niedrigen Konzentration entfernt werden müssen. Das gleiche trifft für die Abluft des beim Trocknen der verarbeitungsfertigen Compound-Polymerisate zu. Die Entfernung bzw. die Beseitigung der

- 2 -

Schadstoffe erfordert aufwendige technische Maßnahmen.

Bei Anwendung der Massepolymerisation, bei der die oben geschilderten Schwierigkeiten nicht auftreten, ergeben sich jedoch schwerwiegende andere Nachteile. Die Herstellung verarbeitungsfertiger Compounds bereitet dann erhebliche Schwierigkeiten, wenn man in technischem Maßstab arbeitet und die Polymerisation in Gegenwart von Schlagfestmachern durchführt. Durch den Zusatz von schlagfestmachenden Polymeren tritt nämlich während der Polymerisation in Masse ein Verkleben auf, weil am Anfang der Polymerisation ( bis zu 30 % Umsatz des eingesetzten Vinylchlorids ) das gebildete Polymere infolge des hohen Gehaltes an schlagfestmachenden Polymeren zu weich ist und den weiteren Verlauf der Massepolymerisation von Vinylchlorid empfindlich stört. Aus diesem Grunde hat bisher ein Verfahren zur Herstellung von schlagfestem Polyvinylchlorid nach dem Masse-Verfahren ( dieses gilt für die einstufigen wie auch für die zweistufigen Verfahren ) keinen Eingang in die Technik gefunden.

Eine besonders große Schwierigkeit tritt dann auf, wenn die Massepolymerisation von Vinylchlorid in Gegenwart relativ großer Mengen schlagfestmachender Polymerer durchgeführt wird, in Mengenbereichen, wie sie benötigt werden, um Compound-Konzentrate herzustellen, die als schlagfestmachende Komponente in Abmischung mit Polyvinylchlorid verwendet werden sollen. Zur Erzielung einer ausreichend schlagfesten Wirkung werden solche Konzentrate benötigt, die relativ große Mengen, z.B. 30 bis 60 Gew.-%, bezogen auf eingesetztes monomeres Vinylchlorid, an dem schlagfestmachenden Polymeren enthalten. Nach der in der DE-OS

- 3 -

27 27 234 beschriebenen zweistufigen Massepolymerisation in flüssiger Phase, wobei in der zweiten Stufe die in Vinylchlorid unlösliche schlagfestmachende Komponente in einer Menge von z.B. nur 12,7 %, bezogen auf das Polymere, zugesetzt wird, können derartige Konzentrationen nicht erreicht werden.
Die Herstellung eines Compound-Konzentrats gelingt nach dem beschriebenen Verfahren nicht.

Nach dem Verfahren der DE-OS 27 27 234 gelingt es auch nicht, in technischem Maßstab verarbeitungsfertige Compounds herzustellen, die ein in Vinylchlorid lösliches schlagfestmachendes Polymeres enthalten. Derartige verarbeitungsfertige Compounds werden in der Praxis mit besonderem Vorteil zu Formkörpern verarbeitet, da diese besonders witterungs- und lichtstabil sind und besonders gut verarbeitet werden können.

Der vorliegenden Erfindung liegt die Aufgabe zugrunde, ein auch in technischem Maßstab anwendbares Verfahren zur Massepolymerisation von Vinylchlorid in Gegenwart von Schlagfestmachern zur Verfügung zu stellen, welches sowohl auf die Herstellung von Compound-Konzentraten als auch auf die Herstellung von verarbeitungsfertigen Compounds anwendbar ist, ohne daß während der Polymerisation Verklumpungen in dem Polymeren und Verkrustunden in den Reaktoren auftreten.

Die Aufgabe wird erfindungsgemäß dadurch gelöst, daß man die Gasphasen- oder Flüssigphasenpolymerisation anwendet und die Polymerisation in Gegenwart eines feinteiligen, inerten anorganisch-oxidischen Hartstoffs und eines schlagfestmachenden Polymeren durchführt.

In vorteilhafter Ausgestaltung der Erfindung ist vor-

- 4 -

gesehen, die Polymerisation in Gegenwart weiterer Additive durchzuführen, die zur Herstellung von PVC-Compounds an sich bekannt sind, wie z.B. Lichtstabilisatoren, Antioxidantien, Gleitmittel, Pigmente, Farbstoffe und dergleichen. Dabei ist es zweckmäßig, die für ein Compound erforderlichen Lichtstabilisatoren und Antioxidantien oder andere Additive, die die Polymerisation stören könnten, am Schluß der Polymerisation zuzugeben. Hierdurch wird die Polymerisation abgestoppt, wodurch ein gleichmäßiger Umsatz gewährleistet wird.

Nach dem Verfahren der vorliegenden Erfindung ist es möglich, auf wirtschaftliche Weise sowohl fertige Compounds, welche direkt vom Pulver aus zu einem schlagfesten Profil oder anderen Formkörpern verarbeitet werden können, als auch Compound-Konzentrate herzustellen, die in Abmischung mit z.B. Vinylchloridhomo- oder -mischpolymerisaten zu schlagfesten geformten Gebilden verarbeitet werden können.
Insbesondere die Compound-Konzentrate sind von besonderer technisch-wirtschaftlicher Bedeutung. Mit Hilfe der Konzentrate können dem jeweiligen Anwendungsgebiet individuell angepasste, verarbeitungsfertige Compounds, z.B. vom Compoundverarbeiter selbst, hergestellt werden, wodurch sich erhebliche Einsparungen bei der Lagerhaltung, dem Transport und bei der Polymerisation selbst ergeben.

Bei dem erfindungsgemäßen Verfahren wird eine besonders gute Einbindung der Additive bewirkt. Eine Abwasser- und Luftbelastung tritt nicht auf. Die Compound-Polymerisate bzw. -Konzentrate zeigen ungewöhnlich hohe Schüttdichten ( von 0,5 bis 1,0 ). Eine Vorverdichtung der sehr gut rieselfähigen ver-

- 5 -

arbeitungsfertigen Compounds oder der Compounds-Konzentrate ist daher in der Regel überflüssig.

Des weiteren ist von Vorteil, daß das erfindungsgemäße Verfahren sowohl zweistufig als auch einstufig durchgeführt werden kann.
Das einstufige Verfahren wird bevorzugt.
Bei der einstufigen Massepolymerisation in der Flüssigphase geht man z.B. so vor, daß man die schlagfestmachende Komponente, den erfindungsgemäß verwendeten Hartstoff sowie gegebenenfalls die üblichen bei Compounds bekannten Additive, soviet sie die Polymerisation nicht oder nur unwesentlich stören, sowie den Katalysator oder das Katalysatorgemisch in einem Druckgefäß vorlegt und nach Verdrängung des Luftsauerstoffs und nach Evakuierung des Druckgefäßes die zur Polymerisation vorgesehene Menge monomeres flüssiges Vinylchlorid, einführt. Die Mischung wird bei einer unterhalb Polymerisationstemperatur liegenden Temperatur, z.B. $30^{o}C$, zur Lösung der schlagfestmachenden Komponente gerührt, z.B. mit einem wandgängigen Bandrührer. Anschließend wird die Mischung auf Polymerisationstemperatur, in der Regel 40 bis $80^{o}C$, vorzugsweise 45 bis $65^{o}C$, aufgeheizt und die Polymerisation durchgeführt.

Bei der zweistufigen Massepolymerisation in der Flüssigphase geht man so vor, daß man in der ersten Stufe mit schnellaufenden Rührern die Polymerisation bis zu Umsätzen von 7 bis 15 % durchführt und anschließend mit langsam laufenden Bandmischern in einem anderen Polymerisationsgefäß die Polymerisation zu Ende führt.

Bei dem erfindungsgemäßen Verfahren der Flüssigphasenpolymerisation werden als schlagfestmachende Polymere

- 6 -

solche eingesetzt, die im Vinylchlorid löslich sind. Es kommen in erster Linie Äthylen-Polymerisate mit höheren Gehalten an Vinylacetat bzw. Alkylacrylat in Frage, z.B. solche, die mehr als 30 Gew.-%, vorzugsweise von 40 bis 50 % Vinylacetat bzw. Alkylacrylat und weniger als 70 Gew.-% Äthylen, insbesondere von 60 bis 50 einpolymerisiert enthalten.

Es können auch Äthylen/Propylencopolymerisate eingesetzt werden, z.B. solche, die 30 bis 60 Gew.-% Propylen einpolymerisiert enthalten. Bei Verwendung von Copolymerisaten aus Äthylen und Alkylacrylaten als schlagfestmachende Komponente werden solche mit Alkylgruppen von $C_1$ bis $C_8$, sowohl geradkettige als auch verzweigte bevorzugt, von denen neben Butylacrylat die Äthyl-butylacrylate und Äthylhexylacrylate genannt seien.

Bei dem erfindungsgemäßen Verfahren wird, sofern das schlagfestmachende Polymere in Vinylchlorid löslich ist, dieses in einer Menge von 3 bis 10 Gew.-%, vorzugsweise 3 bis 8 Gew.-% eingesetzt, bezogen auf die eingesetzte Menge Vinylchlorid.

Will man ein schlagfestmachendes Compound-Konzentrat herstellen, so muß man ein im Vinylchlorid unlösliches schlagfestmachendes Polymeres verwenden, das eine Korngröße von $< 300 \mu$ besitzt mit einer bevorzugten Kornverteilung zwischen 50 und 250 $\mu$. In diesem Falle wird das schlagfestmachende Polymere in einer Menge von 15 bis 60 Gew.-%, bezogen auf eingesetztes Vinylchlorid, verwendet.

In erster Linie kommen als in Vinylchlorid unlösliche schlagfestmachende Polymere, Äthylen-Polymerisate mit niederen Gehalten an Vinylacetat oder Acrylaten in Fragen. Niedere Gehalten sind hierbei $<$ 15 Gew.-%. Auch Äthylen-Propylen-Mischpolymerisate mit niederem Gehalt an Propylen können eingesetzt werden, z.B. solche mit einem Propylengehalt von 0,5 bis 3 Gew.-%.

Die Alkylgruppen der Acrylate sind bevorzugt $C_1$ bis $C_8$-Alkylgruppen, geradkettig oder verzweigt, z.B. Butylacrylat, Äthyl-Butylacrylate, Äthylhexylacrylate und dgl.

Bevorzugt wegen der ausgezeichneten Witterungsbeständigkeit werden Äthylen- Copolymerisate mit Vinylacetat oder Acrylaten verwendet.

Grundsätzlich können aber auch im Vinylchlorid unlösliche chlorierte Polyäthylene verwendet werden. Bevorzugt werden die Äthylen-Vinylacetat-Copolymerisate die 0,5 bis $<$ 15 Gew.-%, vorzugsweise 3,5 bis 13 Gew.-% Vinylacetat einpolymerisiert enthalten. Bei der Herstellung der Konzentrate muß man eventuelle flüssige Komponenten, z.B. Stabillisatoren, wie z.B. epoxidierte Sojabohnenöle oder ähnliches, zum Schluß der Polymerisation zugeben.

Zur Herstellung der Compound-Konzentrate eignet sich vor allem die Gasphasenpolymerisation, wie sie z.B. in der DE-OS 26 23 503 beschrieben wird. Jedoch wird anders als in der DE-OS die Polymerisation nicht nur in Gegenwart der schlagfestmachenden Komponente, sondern zusätzlich in Gegenwart des erfindungsgemäß eingesetzten inerten anorganisch-oxidischen Hartstoffs, sowie ggf. der übrigen, die Polymerisation nicht störenden Compound-Additive durchgeführt. Die Polymerisation erfolgt bei Drücken unterhalb des Sättigungsdrucks des monomeren Vinylchlorids und wird so durchgeführt, daß während der Polymerisation ein

- 8 -

Zweiphasensystem, nämlich Gasphase/Festphase vorliegt. Dabei geht man so vor, daß man die Hartstoffe, das Äthylen/Vinylacetat- bzw. Alkylacrylat- Copolymere und Initiator, sowie ggf. die übrigen Additive, in dem Autoklaven vorlegt und anschließend flüssiges VC unterhalb 30°C einführt, und das Gemisch rührt, wobei sich der Initiator im VC löst und anschließend die Lösung in das vorgelegte Polymere eindiffundiert bis keine flüssige Phase mehr vorliegt. Anschließend wird auf Polymerisationstemperatur erwärmt. Ggf. kann weiteres Vinylchlorid, ggf. zusammen mit weiteren Initiatoren nachgeschleust werden. Die Polymiersationstemperatur liegt im allgemeinen im Bereich von größer 30 bis 80°C, vorzugsweise 40 bis 65°C.

In manchen Fällen ist es von Vorteil, die erfindungsgemäße Flüssigphasen-Polymerisation so durchzuführen, daß das in Vinylchlorid lösliche schlagfestmachende Polymere während der Polymerisation kontinuierlich oder satzweise gelöst im Vinylchlorid in das Reaktionsgefäß eingeschleust wird. Diese Verfahrensweise führt zu einer Verbesserung der Verarbeitbarkeit der Compounds, welches sich in einem höheren Ausstoß bei der Extrusion bemerkbar macht.

Man kann aber auch einen Teil des schlagfestmachenden in VC löslichen Polymeren vorlegen und den Rest, im Vinylchlorid gelöst, nachschleusen.

Außer reinem monomeren Vinylchlorid können auch Mischungen aus Vinylchlorid und mit diesem mischbare weitere polymerisierbare Monomere, z.B. Vinylacetat, Äthylen, Propylen, Acrylnitril etc., wobei die weiteren Monomeren in untergeordneter Menge in der Mischung enthalten sind, der erfindungsgemäßen Masse-

- 9 -

polymerisation unterworfen werden.

Die schlagfestmachenden Polymeren haben im allgemeinen Molgewichte zwischen 5000 und 1 000 000, vorzugsweise 15 000 bis 180 000, osometrisch gemessen.

Wie oben geschildert, kann die erfindungsgemäße Polymerisation in Gegenwart weiterer, zur Herstellung von Polyvinylchlorid-Compounds an sich bekannter Additive, wie Gleitmittel, Stabilisatoren, Pigmente, Farbstoffe und dergleichen durchgeführt werden. Gleitmittel sind z.B. übliche Paraffinwachse, niedermolekulares Polyäthylen, langkettige Fettsäuren ( 8 bis 20 Kohlenstoffatome ) und deren Aluminium-, Calcium-, Blei- und Lithiumsalze. Die üblichen Mengen liegen zwischen 1 und 4 Gew.-%, bezogen auf eingesetztes Vinylchlorid, sofern man das erfindungsgemäße Verfahren zur Herstellung verarbeitungsfertiger Compounds anwendet. Bei der Herstellung von Konzentration liegt die Menge entsprechend höher.

Geeignete Stabilisatoren sind z.B. Barium- und/oder Cadminumsalze langkettiger Carbonsäuren, epoxidierte Verbindungen wie epoxidierte Fettsäureester, mehrwertige Alkohole wie Pentaerythrit und Trimethylolpropan, zinnorganische Verbindungen, phenolische Antioxidantien wie Bisphenol A, 2,4-Dimethylphenol, 2,4-Dimethyl-tert.-butylphenol, Hydrochinon und anorganische Phosphite wie beispielsweise Diphenyl-Alkyl-Phospite mit 6 bis 18 C-Atomen in der Alkylgruppe bzw. Isoalkylgruppe wie u.a. der i-Decyl- oder i-Octyl-Gruppe. Die Stabilisatoren werden im allgemeinen bei der Herstellung verarbeitungsfertiger Compounds in einer Menge von bis zu etwa 6 Gew.-%, bezogen auf

- 10 -

eingesetztes Vinylchlorid, eingesetzt. Bei der Herstellung der Konzentrate ist die Menge entsprechend höher.

Die angegebenen Mengen beziehen sich jeweils auf eingesetztes monomeres Vinylchlorid.

Selbstverständlich können auch Gleitmittel-Gemische oder Stabilisatoren-Gemische angewendet werden.

Wesentliches Merkmal des erfindungsgemäßen Verfahrens ist, daß die Polymerisation in Gegenwart wenigstens eines feinteiligen inerten anorganisch-oxidischen Hartstoffs durchgeführt wird, wobei die Menge mindestens 5 Gew.-% betragen sollte. Es hat sich herausgestellt, daß auch die Korngrößen der eingesetzten Hartstoffe wesentlich sind. Sie sollen im Bereich von < 100 $\mu$, vorzugsweise im Bereich von 0 bis 20 $\mu$ liegen.

Unter inerten Hartstoffen sollen im Sinne der Erfindung solche verstanden werden, die die Polymerisation von VC (im Sinne einer chemischen Reaktion, z.B. durch Kettenabbruch) nicht stören, jedoch adhäsive Wirkung zum PVC oder VC besitzen.

Als geeignete Hartstoffe seien $SiO_2$ und/oder $TiO_2$ und/oder Calciumcarbonat genannt.

Als $SiO_2$-Hartstoffe kommen in erster Linie chemisch reine amorphe Kieselsäuren vom Typ Aerosil ® in Frage, die auf chemischem Wege, z.B. durch Hydrolyse von Siliciumtetrachlorid in einer Knallgasflamme gewonnen wurden. Im allgemeinen sind die Teilchen porenfrei, haben Abmessungen im Bereich < 0 bis 40 $\mu$, bevorzugt

- 11 -

10 bis 20 $\mu$, und spezifische Oberflächen, gemessen nach BET, von $< 1\,000$ $m^2/g$, insbesondere 50 bis 450 $m^2/g$. Im allgemeinen ist der $SiO_2$-Gehalt derartiger $SiO_2$-Teilchen $< 99,8$ Gew.-%.

Als $TiO_2$-Hartstoffe kommen in erster Linie solche in Frage, die auf chemishem Wege gewonnen wurden, z.B. durch Umsetzung von Ilmenit mit Schwefelsäure, Hydrolyse der schwefelsäuren Titanlösung und Calcinierung der Hydrolysate oder die z.B. durch Verbrennung von $TiCl_4$ mit $O_2$ hergestellt wurden. Die Teilchengröße der derart hergestellten Titandioxide liegt im allgemeinen unter 10 $\mu$, zumeist im Bereich von etwa 1 bis 2 $\mu$.

Als Calciumcarbonate kommen z.B. solche in Frage, die auf chemischem Wege, z.B. durch Fällung aus Calciumhydroxidlösungen gewonnen werden können und die zu mindestens 98 Gew.-% aus $CaCO_3$ bestehen.

Besonders gut geeignete Calciumcarbonate sind solche, bei denen von natürlich vorkommenden Kreiden ausgegangen wird, die zu kristallinen, zumeist mikrokristallinen, Calciumcarbonaten hoher chemischer Reinheit und Feinheit durch spezielle Reinigungs- und Mahlverfahren aufbereitet werden. Im allgemeinen enthalten diese Calciumcarbonate mehr als 93 Gew.-% $CaCO_3$, bevorzugt mehr als 97 Gew.-% $CaCO_3$. Die spezifischen Oberflächen bewegen sich im allgemeinen zwischen 1 und 20 $m^2/g$, gemessen nach BET, bevorzugt im Bereich von 1 bis 10 $m^2/g$. Die Korngrößenbereiche bewegen sich im allgemeinen zwischen 0 bis etwa 20 $\mu$. Bevorzugt werden solche Korngrößenbereiche, bei denen etwa 30 bis 90 % der Körner freiner als 2 $\mu$ sind. Solche Calciumcarbonate sind z.B. unter den Bezeichnungen Omya industrie spezial [R], Hy-

drocarb, Durcal, Carborex, Millicarb, Calibrite, Omya und dgl. im Handel erhältlich.

Die erfindungsgemäß eingesetzten Hartstoffe können als gecoatete oder ungecoatete Pulver eingesetzt werden, z.B. gecoated mit einem Hydrophobierungsmittel, z.B. Erdalkalistearate und/oder mit einem Gleitmittel, z.B. Paraffinwachs und/oder mit einem Haftvermittler z.B. einer siliciumorganischen Verbindung.

Es hat sich als zweckmäßig erwiesen, die Hartstoffe in einer Menge von 5 bis 20 Gew.-%, vorzugsweise 8 bis 15 Gew.-%, bezogen auf eingesetztes Vinylchlorid zu verwenden, sofern als schlagfestmachendes Polymeres ein solches verwendet wird, das in Vinylchlorid löslich ist.

Sofern ein schlagfestmachendes Polymeres verwendet wird, das in Vinylchlorid unlöslich ist, dann werden die Hartstoffe in einer Menge von 20 bis 60 Gew.-%, vorzugsweise 30 bis 50, bezogen auf die Summe eingesetztes Vinylchlorid und eingesetztes schlagfestmachendes Polymere, verwendet.

Die erfindungsgemäß eingesetzten Hartstoffe müssen sowohl bei der Flüssigphasen- als auch Gasphasenpolymerisation bereits zu Beginn der Polymerisation zugegen sein.

- 13 -

Beispiel 1

In einen 30 l-Stahlautoklaven mit randgängigem Bandrührer ergeben:

515 g Levapren ® 450 (Copolymeres aus Äthylen und Vinylacetat (45 Gew.-% VAc), Handelsprodukt der BAYER AG, Leverkusen), 240 g Ba-Cd-Myristinat, 108 g Paraffinwachs, 413 g feingemahlenes Titandioxid (Korngröße kleiner 2 $\mu$), 542 g feingemahlenes Calciumcarbonat (90 % der Teilchen haben $\emptyset$ von 0,5 bis 10 $\mu$), 109 g epoxidiertes Sojabohnenöl, 4,5 g Dicyclohexylperoxidicarbonat, 50 g Dilauroylperoxid. Zur Verdrängung des Luftsauerstoffes wird der Autoklav dreimal mit Reinstickstoff abgedrückt. Dann wird der Autoklav evakuiert, und anschließend werden 11,3 kg Vinylchlorid eingeführt. Zunächst wird bei 30°C 2 Stunden gerührt und anschließend aufgeheizt (Rührer 150 UpM). Die Temperatur wird über den Druck geregelt (8,4 bar). Die Umlauftemperatur im Doppelmantel des Autoklaven wird durch einen Begrenzer auf maximal 59°C gehalten. Sobald der Druck 8,1 bar unterschreitet, wird die Druckregelung aotumatisch auf Temperaturregelung umgeschaltet und der Autoklav mit einer konstanten Temperatur von 57°C im Aussenmantel beheizt. Sobald der Druck den Wert von 4,0 bar erreicht hat, werden in den Autoklav 20 g Bisphenol A in 200 ml Methanol zugepumpt und noch 1/2 Stunde gerührt. Danach wird der Autoklav 1 Stunde evakuiert. Nach einer Polymerisationszeit von 9 Stunden werden 12,6 kg Masse-Compound-Polymerisat erhalten. Das entspricht einem Umsatz von 94,4 % bezogen auf eingesetztes Vinylchlorid. Das Compound-Polymerisat hat eine Schüttdichte von 0,903, ist frei von Krusten und Klumpen. Die Autoklavenwand zeigt keinen Belag. Das Compoundpolymerisat wird direkt vom Pulver aus auf einem Extruder zu einem Strang verarbeitet. Der Strang ist knötchenfrei und zeigt eine glatte, glänzende Oberfläche. Die U-Kerbzähigkeit beträgt nach DIN 53453  30 KJ/m$^2$.

### Beispiel 2

Beispiel 1 wird wiederholt mit dem Unterschied, daß 50 % des eingesetzten Levapren ® erst nach 5 Stunden Polymerisationszeit gelöst in 1,3 kg Vinylchlorid nachdosiert werden. Die Eigenschaften dieses Compoundpolymerisates sind wie im Beispiel 1 beschrieben nur mit dem Unterschied, daß bei der Extrusion ein um 30 % erhöhter vergleichsweiser Ausstoß erzielt wird.

### Beispiel 3 (Vergleich)

Beispiel 1 wird wiederholt mit dem Unterschied, daß Ba-Cd-Myristinat, Paraffinwachs, Titandioxid, Calciumcarbonat und epoxidiertes Sojabohnenöl nicht mitverwendet werden. Nach der gleichen Polymerisationszeit werden 9,77 kg Polymerisat erhalten. Das entspricht einer Ausbeute von 81,4 % bezogen auf Vinylchlorid. Das Polymerisat enthält kompakte Kugeln (∅'0,5-1,5 cm). Der Rührer und die Autoklavenwand sind verkrustet (500 g Krusten).

### Beispiel 4

Beispiel 1 wird wiederholt mit dem Unterschied, daß an Stelle von Levapren ® 450 CPE 3614 (chloriertes Polyäthylen der DOW CHEMICAL, 45 % Cl) verwendet wird. Polymerisationsverlauf und Ausbeute entsprechend dem Beispiel 1. Das so hergestellte Compound-Polymerisat läßt sich auf einem Extruder zu einem mattseiden glänzenden Strang extrudieren. Die Oberfläche ist glatt

- 15 -

und knötchenfrei. Die U-Kerbzähigkeit nach DIN 53453 beträgt 35 KJ/m$^2$.

Beispiel 5 (Vergleich)

Beispiel 4 wird wiederholt mit dem Unterschied, daß Ba-Cd-Myristinat, Paraffinwachs, Titandioxid, Calciumcarbonat und epoxidiertes Sojabohnenöl nicht mitverwendet werden. Nach der gleichen Polymerisationszeit werden 9,57 kg Polymerisat erhalten. Das entspricht einer Ausbeute von 79,6 %, bezogen auf Vinylchlorid. Der Autoklav ist verkrustet (600 g). Im Polymerisat befinden sich 1,2 kg Krusten.

Beispiel 6

In den im Beispiel 1 beschriebenen 30 l-Stahlautoklaven werden gegeben 2575 g Alkathene$^R$ VJF 501 Pulver 300 u (Copolymeres Äthylen-Vinylacetat (7,5 % Vinylacetat, Handelsprodukt der ICI). 1815 g Ba-Cd-Myristinat, 434 g Paraffinwachs, 2061 g Titandioxid, 2169 Calciumcarbonat, 1,2 g Dicyclohexylperoxidicarbonat und 13,35 g Dilauroylperoxid. Der Autoklav wird evakuiert, mit Stickstoff abgedrückt, wieder evakuiert, mit Vinylchlorid auf 1,5 bar abgedrückt und evakuiert. Dann werden 1500 g Vinylchlorid eingefüllt und eine halbe Stunde bei 30°C gerührt. Es wird auf 58°C aufgeheizt, bis sich ein Druck von 3,5 bar einstellt. Durch Regelung wird dieser Druck beibehalten. Sinkt der Druck unter 1,3 bar, werden weitere 1500 Vinylchlorid eingefüllt. Nach 9 Stunden ist der Druck auf 1,8 bar abgesunken. Dann werden in den Autoklav eingepumpt, 541 g epoxidiertes Sojabohnenöl und 108 g Bisphenol A in 300 ml Methanol . Es wird noch 1/2 Stunde gerührt und anschließend das Restmonomere und Methanol im Vakuum entfernt. Es werden 12,22 kg Compound-

- 16 -

Konzentrat erhalten (80 % Umsatz bezogen auf eingesetztes VC). Es treten keine Klumpen und Verkrustungen
auf. 21,3 Teile des Compoundpolymerisates werden mit
100 Teilen PVC vom Suspensionstyp mit K-Wert 68 vermischt und auf einem Extruder zu einem Band extrudiert.
Das Extrudat hat eine stark glänzende und knötchenfreie
Oberfläche. Der U-Kerb beträgt 32 $KH/m^2$.

Beispiel 7
Beispiel 6 wird wiederholt mit dem Unterschied, daß
das epoxidierte Sojabohnenöl direkt zugegeben wird.
Es werden wieder 12,22 kg Compound-Polymerisat erhalten. Der Autoklav ist auch krustenfrei, jedoch enthält das Polymerisat 1,6 kg Klumpen.

Dr.La/af

Patentansprüche

1. Verfahren zur Massepolymerisation von Vinylchlorid
in Gegenwart von Additiven, dadurch gekennzeichnet,
daß man die Gasphasen- oder Flüssigphasenpolymerisation anwendet und die Polymerisation in Gegenwart
wenigstens eines feinteiligen inerten anorganisch-
oxidischen Hartstoffes und eines schlagfestmachenden Polymeren durchführt.

2. Verfahren nach Anspruch 1, dadurch gekennzeichnet,
daß das schlagfestmachende Polymere in Vinylchlorid
löslich ist.

3. Verfahren nach Anspruch 2, dadurch gekennzeichnet,
daß das schlagfestmachende Polymere in einer Menge
von 3 bis 10 Gew.-%, vorzugsweise 3 bis 8 Gew.-% eingesetzt wird, bezogen auf die eingesetzte Menge
Vinylchlorid.

4. Verfahren nach Anspruch 2 oder 3, dadurch gekennzeichnet, daß der Hartstoff in einer Menge von
wenigstens 5 bis 20 Gew.-%, vorzugsweise 8 bis 15
Gew.-%, bezogen auf eingesetztes Vinylchlorid, verwendet wird.

5. Verfahren nach einem der Ansprüche 2 bis 4, dadurch
gekennzeichnet, daß das schlagfestmachende, in
Vinylchlorid gelöste Polymere kontinuierlich oder
diskontinuierlich während der Polymerisation zugegeben wird.

6. Verfahren nach Anspruch 1, dadurch gekennzeichnet,
daß das schlagfestmachende Polymere in Vinylchlorid
unlöslich ist.

- 18 -

7. Verfahren nach Anspruch 6, dadurch gekennzeichnet, daß das schlagfestmachende Polymere in einer Menge von 15 bis 60 Gew.-%, bezogen auf eingesetztes Vinylchlorid, verwendet wird.

8. Verfahren nach einem der Ansprüche 6 oder 7, dadurch gekennzeichnet, daß der Hartstoff in einer Menge von 20 bis 60 Gew.-%, vorzugsweise 30 bis 50, bezogen auf die Summe eingesetztes Vinylchlorid und eingesetztes schlagfestmachendes Polymeres, verwendet wird.

9. Verfahren nach einem der Ansprüche 1 bis 8, dadurch gekennzeichnet, daß die Hartstoffe eine spezifische Oberfläche, gemessen nach BET, von 1 bis kleiner 1000 $m^2$/g, gemessen nach BET, aufweisen.

10. Verfahren nach einem der Ansprüche 1 bis 9, dadurch gekennzeichnet, daß Hartstoffe mit Korngrößen im Bereich von kleiner 100 $\mu$, vorzugsweise im Bereich von 0 bis 20 $\mu$, eingesetzt werden.

11. Verfahren nach einem der Ansprüche 1 bis 10, dadurch gekennzeichnet, daß der Hartstoff Calciumcarbonat und/oder Titandioxyd ist.

12. Verfahren nach einem der Ansprüche 1 bis 11, dadurch gekennzeichnet, daß man die Polymerisation in Gegenwart weiterer, zur Herstellung von Polyvinylchlorid-Compounds an sich bekannter Additive, wie Gleitmittel, Stabilisatoren oder dgl., durchführt.

13. Verfahren nach einem der Ansprüche 1 bis 12, dadurch gekennzeichnet, daß die Polymerisation einstufig durchgeführt wird.

Dr.La/af